# EUROPEAN PATENT APPLICATION

(11) **EP 4 386 276 A1**
(43) Date of publication of application: **19.06.2024**
(21) Application number: 21953470.8
(22) Date of filing: 11.08.2021
(51) Int. Cl.: F24H 1/10

(54) **WATER HEATER**

(71) Applicant: MITSUBISHI ELECTRIC CORPORATION, Chiyoda-ku Tokyo 100-8310 (JP)
(72) Inventor: MOR, Hiroyuki, Tokyo 100-8310 (JP); MAITANI, Hiroshi, Tokyo 100-8310 (JP); NAKAZONO, Junichi, Tokyo 100-8310 (JP)
(74) Representative: Meissner Bolte Partnerschaft mbB
(86) International application number: PCT/JP2021/029598
(87) International publication number: WO 2023/017573

(57) **Abstract**

A hot-water supply apparatus is configured to perform a heat storage operation of storing heat of a heat medium and a hot-water supply operation of supplying hot water to a hot-water demand side through use of the heat of the heat medium. The hot-water supply apparatus includes a heat medium circuit through which the heat medium circulates, a latent heat storage device having a latent heat storage material, the latent heat storage device being configured to store heat and reject heat through transfer of heat between the latent heat storage material and the heat medium, a heat medium heat storage device in which the heat medium is stored so that thermal stratification is formed, and a heating device configured to heat the heat medium. The heating device heats at least the heat medium flowing out from a lower portion of the heat medium heat storage device.

## Description

### Technical Field

The present disclosure relates to a hot-water supply apparatus including a heat storage tank configured to store heat produced by a heat source.

### Background Art

There has conventionally been known a hot-water supply apparatus constituted by a heat pump unit and a tank unit that are separate from each other. Such a hot-water supply apparatus is configured such that the heat pump unit and the tank unit are connected by a refrigerant pipe or a heat medium pipe, a power wire, and a communication wire or other wires and integrally operate.

There has recently been proposed a hot-water supply apparatus configured such that for the purpose of reducing the size of a tank unit, a latent heat storage material that is higher in storage of heat per unit volume than water is used as a heat storage material in a heat storage tank (see, for example, Patent Literature 1). In the hot-water supply apparatus described in Patent Literature 1, the latent heat storage material is used as the heat storage material in the heat storage tank, and because of the properties of the latent heat storage material, the temperature of hot water serving as a heat medium that flows out from the heat storage tank to a heating unit does not become lower than the temperature of the latent heat storage material. Therefore, accumulation of heat in the heat storage tank proceeds, and the temperature of hot water that flows out from the heat storage tank to the heating unit increases as the temperature of the heat medium in the heat storage tank increases, with the result that there is undesirably a decrease in energy efficiency. To address this problem, there has been proposed a technique for maintaining high energy efficiency by reducing the heating temperature or the flow rate of the heat medium according to the state of accumulation of heat in the heat storage material (see, for example, Patent Literature 2).

### Citation List

### Patent Literature

Patent Literature 1: Japanese Unexamined Patent Application Publication No. 2009-085565
Patent Literature 2: Japanese Unexamined Patent Application Publication No. 2015-175582

### Summary of Invention

### Technical Problem

However, in Patent Literature 2, the heating temperature and flow rate of the heat medium are controlled according to the state of accumulation of heat in the heat storage tank, and the temperature and flow rate of the heat medium are reduced as the temperature of the heat medium increases. Therefore, there has undesirably been a decrease in storage of heat per unit time in the heat storage tank.

The present disclosure was made in view of the problems in the conventional technologies and has as an object to provide a hot-water supply apparatus configured to improve energy efficiency during a heat storage operation without causing a decrease in storage of heat per unit time in a heat storage tank.

### Solution to Problem

A hot-water supply apparatus according to an embodiment of the present disclosure is a hot-water supply apparatus for performing a heat storage operation of storing heat of a heat medium and a hot-water supply operation of supplying hot water to a hot-water demand side through use of the heat of the heat medium. The hot-water supply apparatus includes a heat medium circuit through which the heat medium circulates, a latent heat storage device having a latent heat storage material, the latent heat storage device being configured to store heat and reject heat through transfer of heat between the latent heat storage material and the heat medium, a heat medium heat storage device in which the heat medium is stored so that thermal stratification is formed, and a heating device configured to heat the heat medium. The heating device heats at least the heat medium flowing out from a lower portion of the heat medium heat storage device.

### Advantageous Effects of Invention

According to the embodiment of the present disclosure, the heat medium flowing out from the lower portion of the heat medium heat storage device with the thermal stratification formed therein is heated by the heating device. At this point in time, the heat medium kept at a low temperature by the thermal stratification is heated by the heating device. This makes it possible to improve energy efficiency during the heat storage operation without causing a decrease in storage of heat per unit time in a heat storage tank.

### Brief Description of Drawings

[Fig. 1] Fig. 1 is a functional block diagram showing an example of a configuration of a hot-water supply apparatus according to Embodiment 1.
[Fig. 2] Fig. 2 is a schematic view showing an example of a circuit configuration of the hot-water supply apparatus of Fig. 1.
[Fig. 3] Fig. 3 is a schematic view showing an example of an external appearance of a latent heat storage device of Fig. 1.
[Fig. 4] Fig. 4 is a schematic view showing an example of an external appearance of a heat medium heat storage device of Fig. 1.
[Fig. 5] Fig. 5 is a hardware configuration diagram showing an example of a configuration of a controller of Fig. 1.
[Fig. 6] Fig. 6 is a hardware configuration diagram showing another example of the configuration of the controller of Fig. 1.
[Fig. 7] Fig. 7 is a schematic view for explaining the flow of a heat medium during a heat storage operation.
[Fig. 8] Fig. 8 is a schematic view for explaining the flow of the heat medium during a first hot-water supply operation.
[Fig. 9] Fig. 9 is a schematic view for explaining the flow of the heat medium during a second hot-water supply operation.
[Fig. 10] Fig. 10 is a flow chart showing an example of the flow of a heat storage hot-water supply process that is performed by the hot-water supply apparatus according to Embodiment 1.
[Fig. 11] Fig. 11 is a schematic view showing an example of a circuit configuration of a hot-water supply apparatus according to Embodiment 2.
[Fig. 12] Fig. 12 is a schematic view for explaining the flow of a heat medium during a first heat storage hot-water supply operation.
[Fig. 13] Fig. 13 is a schematic view for explaining the flow of the heat medium during a second heat storage hot-water supply operation.
[Fig. 14] Fig. 14 is a schematic view for explaining the flow of the heat medium during a third hot-water supply operation.
[Fig. 15] Fig. 15 is a flow chart showing an example of a heat storage hot-water supply process that is performed by the hot-water supply apparatus according to Embodiment 2.
[Fig. 16] Fig. 16 is a flow chart showing the example of the heat storage hot-water supply process that is performed by the hot-water supply apparatus according to Embodiment 2.
[Fig. 17] Fig. 17 is a schematic view showing an example of a circuit configuration of a hot-water supply apparatus according to Embodiment 3.
[Fig. 18] Fig. 18 is a schematic view for explaining the flow of a heat medium during a third heat storage hot-water supply operation.
[Fig. 19] Fig. 19 is a schematic view for explaining the flow of the heat medium during a fourth heat storage hot-water supply operation.
[Fig. 20] Fig. 20 is a schematic view for explaining the flow of the heat medium during a fourth hot-water supply operation.
[Fig. 21] Fig. 21 is a flow chart showing an example of a heat storage hot-water supply process that is performed by the hot-water supply apparatus according to Embodiment 3.
[Fig. 22] Fig. 22 is a flow chart showing the example of the heat storage hot-water supply process that is performed by the hot-water supply apparatus according to Embodiment 3.
[Fig. 23] Fig. 23 is a schematic view showing an example of a circuit configuration of a modification of a hot-water supply apparatus according to Embodiment 3. Description of Embodiments

The following describes embodiments of the present disclosure with reference to the drawings. The present disclosure is not limited to the following embodiments but may be modified variously without departing from the scope of the present disclosure. The present disclosure encompasses all combinations of combinable ones of components that are described in the following embodiments. Further, constituent elements given identical reference signs in the drawings are identical or equivalent to each other, and these signs are adhered to throughout the full text of the description.

### Embodiment 1.

A hot-water supply apparatus according to Embodiment 1 is described. The hot-water supply apparatus according to Embodiment 1 performs a heat storage operation of storing the heat of a heat medium that circulates through a heat medium circuit, and supplies a hot-water demand side with hot water produced through the use of the heat of the heat medium.

### [Configuration of Hot-water Supply Apparatus 1]

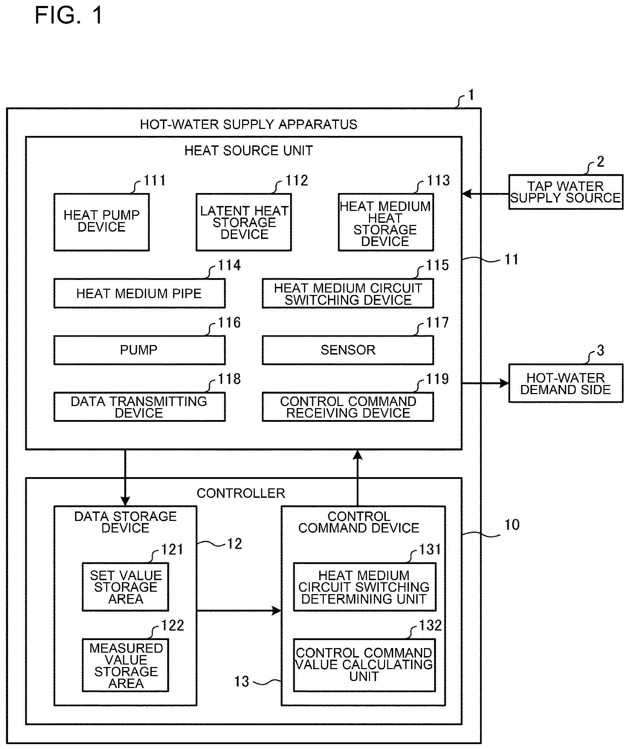

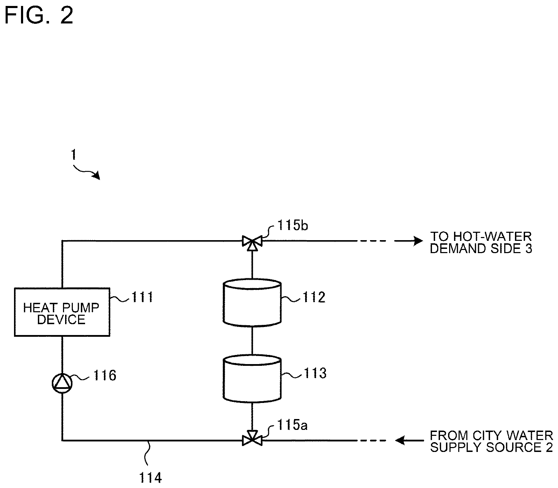

Fig. 1 is a functional block diagram showing an example of a configuration of a hot-water supply apparatus according to Embodiment 1. Fig. 2 is a schematic view showing an example of a circuit configuration of the hot-water supply apparatus of Fig. 1. As shown in Figs. 1 and 2, the hot-water supply apparatus 1 is configured to include a heat source unit 11 and a controller 10 and connected to a tap water supply source 2 and a hot-water demand side 3. The tap water supply source 2 is a water source that supplies the hot-water supply apparatus 1 with water serving as a heat medium needed for hot-water supply. The tap water supply source 2 is for example a terminal of a common water supply or other terminals. The hot-water demand side 3 is a place in which hot water produced by the hot-water supply apparatus 1 is used. The hot-water demand side 3 is for example a terminal of a common household bathroom or shower or other terminals.

### (Heat Source Unit 11)

The heat source unit 11 includes a heat pump device 111, a latent heat storage device 112, a heat medium heat storage device 113, a heat medium pipe 114, a heat medium circuit switching device 115, a pump 116, a sensor 117, a data transmitting device 118, and a control command receiving device 119. The heat pump device 111, the latent heat storage device 112, and the heat medium heat storage device 113 are connected by the heat medium pipe 114 to form a heat medium circuit through which a heat medium such as water circulates. It should be noted that the following description may refer the heat medium circuit as "water circuit" in a case in which water is used as the heat medium.

The numbers of these devices provided in the heat source unit 11 are each not limited to 1 but may each be more than 1. For example, in this example, the heat medium circuit switching device 115 includes a first heat medium circuit switching device 115a and a second heat medium circuit switching device 115b.

The heat pump device 111 is provided as a heating device configured to heat the heat medium. The heat pump device 111 heats the heat medium by a heat pump mechanism as the heat medium circulates through the water circuit. The heat pump device 111 is connected to the second heat medium circuit switching device 115b and the pump 116.

It should be noted that although the following example illustrates a case in which the heat pump device 111 is used as the heating device, the heating device is not limited to the heat pump device 111. In Embodiment 1, for example, a heat device having such characteristics that energy efficiency in heating increases as the temperature of an influent heat medium decreases can be employed instead of the heat pump device 111.

The latent heat storage device 112 stores and rejects latent heat through the transfer of heat by a change in phase of a substance. The latent heat storage device 112 is connected in series to the heat medium heat storage device 113 and connected to the second heat medium circuit switching device 115b.

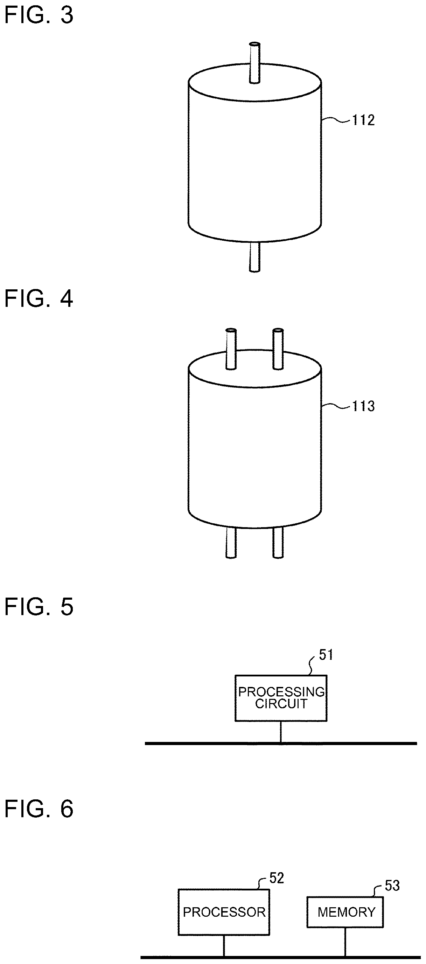

Fig. 3 is a schematic view showing an example of an external appearance of the latent heat storage device of Fig. 1. As shown in Fig. 3, the latent heat storage device 112 is formed in the shape of a cuboid or a circular cylinder and filled with a latent heat storage material inside. Usable examples of such a latent heat storage material include paraffin or other materials. The latent heat storage device 112 has a top surface portion to which a pipe to serve as an inlet and outlet for the heat medium is connected and a bottom surface portion to which a pipe to serve as an inlet and outlet for the heat medium is connected, and the heat medium flows out of the latent heat storage device 112 through one of the pipes as much as the heat medium flows into the latent heat storage device 112 through the other of the pipes. When the heat medium flows into and out of the latent heat storage device 112 in this way, the transfer of heat to and from the heat medium occurs due to a change in phase of the latent heat storage material with which the latent heat storage device 112 is filled inside.

The heat medium heat storage device 113 of Fig. 1 stores and rejects heat by storing the heat medium heated by the heat pump device 111. The heat medium heat storage device 113 is connected in series to the latent heat storage device 112 and connected to the first heat medium circuit switching device 115a.

Fig. 4 is a schematic view showing an example of an external appearance of the heat medium heat storage device of Fig. 1. As shown in Fig. 4, the heat medium heat storage device 113 is formed in the shape of a cuboid or a circular cylinder. A usable example of the heat medium heat storage device 113 is an enclosed tank in which water is used as a heat medium. The heat medium heat storage device 113 has a top surface portion to which two pipes to serve as inlets and outlets for the heat medium are connected and a bottom surface portion to which two pipes to serve as inlets and outlets for the heat medium are connected, and the heat medium flows out of the heat medium heat storage device 113 through one of the surfaces as much as the heat medium flows into the heat medium heat storage device 113 through the other of the surfaces. The heat medium heat storage device 113 is always filled with the heat medium inside, and by a density difference arising from a difference in temperature of the heat medium, such thermal stratification is always formed as to increase in temperature upward and decrease in temperature downward.

In Embodiment 1, in a case in which the heat medium heat storage device 113 is connected in series to the latent heat storage device 112, one of the two pipes provided in the upper portion is connected to the latent heat storage device 112, and the other of the pipes is not used. Further, one of the two pipes provided in the lower portion of the heat medium heat storage device 113 is connected to the after-mentioned first heat medium circuit switching device 115a, and the other of the pipes is not used.

The heat medium circuit switching device 115 of Fig. 1 is provided to switch between flow passages in the water circuit formed by the devices being connected to one another by the heat medium pipe 114. The heat medium circuit switching device 115 performs switching under the control of the controller 10. Usable examples of the heat medium circuit switching device 115 include a three-way valve or other valves. In the examples shown in Figs. 1 and 2, the heat medium circuit switching device 115 includes the first heat medium circuit switching device 115a and the second heat medium circuit switching device 115b.

The first heat medium circuit switching device 115a has three connecting ports to each of which the tap water supply source 2, the lower portion of the heat medium heat storage device 113, and the pump 116 are connected separately. The second heat medium circuit switching device 115b has three connecting ports to each of which the hot-water demand side 3, the heat pump device 111, and the upper portion of the latent heat storage device 112 are connected separately.

The pump 116 is a device configured to apply pressure to cause the heat medium to flow through the water circuit and is driven by a motor (not illustrated). The pump 116 is connected to the heat pump device 111 and the first heat medium circuit switching device 115a.

The sensor 117 measures physical quantities at various places in the heat source unit 11. The sensor 117 includes one or more sensors 117 provided in the heat source unit 11. Specifically, the sensor 117 measures physical quantities such as the internal temperatures of the latent heat storage device 112 and the heat medium heat storage device 113 and the flow rate of the heat medium in the heat medium pipe 114.

The data transmitting device 118 transmits data measured by the sensor 117 to a data storage device 12 of the after-mentioned controller 10. The control command receiving device 119 receives a control command value outputted from a control command device 13 of the after-mentioned controller 10 and transfers the control command value to the devices of the heat source unit 11.

### (Controller 10)

The controller 10 includes the data storage device 12 and the control command device 13 and controls the hot-water supply apparatus 1 based on various set values set in advance, physical quantities measured by the sensor 117, or other values. The controller 10 has various functions that are implemented by executing software on an arithmetic device such as a microcomputer or is constituted by hardware or other devices such as a circuit device configured to implement the various functions.

The data storage device 12 stores various set values set in advance for use in control and information representing physical quantities measured by the sensor 117. The data storage device 12 is provided with a set value storage area 121 and a measured value storage area 122.

The set value storage area 121 is an area provided to store various set values set in advance for use in control. Examples of set values that are stored in the set value storage area 121 include a hot-water supply temperature or other values.

The measured value storage area 122 is an area provided to store information representing physical quantities measured by the sensor 117. Example of physical quantities that are stored in the measured value storage area 122 include the internal temperatures of the latent heat storage device 112 and the heat medium heat storage device 113, the flow rate of the heat medium in the heat medium pipe 114, or other values.

The control command device 13 calculates, based on various types of information stored in the data storage device 12, a control command value for controlling the heat pump device 111, the heat medium circuit switching device 115, and the pump 116. Moreover, the control command device 13 outputs, to the heat source unit 11, the control command value generated by the calculation. The control command device 13 includes a heat medium circuit switching determining unit 131 and a control command value calculating unit 132.

The heat medium circuit switching determining unit 131 makes, based on various types of information stored in the data storage device 12, a determination as to how a connecting condition of the heat medium pipe 114 is changed. Moreover, the heat medium circuit switching determining unit 131 controls the heat medium circuit switching device 115 based on a result of the determination.

The control command value calculating unit 132 calculates and generates, based on information stored in the data storage device 12 and the connecting condition of the heat medium pipe 114 as determined by the heat medium circuit switching determining unit 131, a control command value for controlling how the heat pump device 111 and the pump 116 operate.

Fig. 5 is a hardware configuration diagram showing an example of a configuration of the controller of Fig. 1. In a case in which the various functions of the controller 10 are implemented by hardware, the controller 10 of Fig. 1 is constituted by a processing circuit 51 as shown in Fig. 5. The functions of the data storage device 12 and the control command device 13 of Fig. 1 are implemented by the processing circuit 51.

In a case in which the various functions are implemented by the hardware, the processing circuit 51 corresponds to a single circuit, a complex circuit, a programed processor, a parallel-programed processor an application specific integrated circuit (ASIC), a field-programmable gate array (FPGA), or a combination thereof. Functions of parts of the data storage device 12 and the control command device 13 may be implemented by each separate processing circuits 51, or the functions of the parts may be implemented by one processing circuit 51.

Fig. 6 is a hardware configuration diagram showing another example of the configuration of the controller of Fig. 1. In a case in which the various functions of the controller 10 are implemented by software, the controller 10 of Fig. 1 is constituted by a processor 52 and a memory 53 as shown in Fig. 6. The functions of the data storage device 12 and the control command device 13 of Fig. 1 are implemented by the processor 52 and the memory 53.

In a case in which the various functions are implemented by the software, the functions of the data storage device 12 and the control command device 13 are implemented by the software, firmware, or a combination of the software and the firmware. The software and the firmware are described as programs and stored in the memory 53. The processor 52 implements the functions of the parts by reading out and executing the programs stored in the memory 53.

Usable examples of the memory 53 include a nonvolatile or volatile semiconductor memory or other memories such as a random-access memory (RAM), a read-only memory (ROM), a flash memory, an erasable and programmable ROM (EPROM), and an electrically erasable and programmable ROM (EEPROM). Further, usable examples of the memory 53 may include detachable storage media such as a magnetic disc, a flexible disc, an optical disc, a compact disc (CD), a mini disc (MD), and a digital versatile disc (DVD).

### [Actions of Hot-water Supply Apparatus 1]

Actions of the hot-water supply apparatus 1 thus configured are described. The following describes the flow of a heat medium that circulates through the heat medium circuit during a heat storage operation and a hot-water supply operation and a heat storage hot-water supply process. The hot-water supply apparatus 1 according to Embodiment 1 can perform a heat storage operation, a first hot-water supply operation, and a second hot-water supply operation.

### (Heat Storage Operation)

A heat storage operation that is performed by the hot-water supply apparatus 1 is described. The heat storage operation according to Embodiment 1 is an operation of heating a low-temperature heat medium with the heat pump device 111, storing, in the latent heat storage device 112, the heat of the heat medium thus heated, and storing the heat medium in the heat medium heat storage device 113.

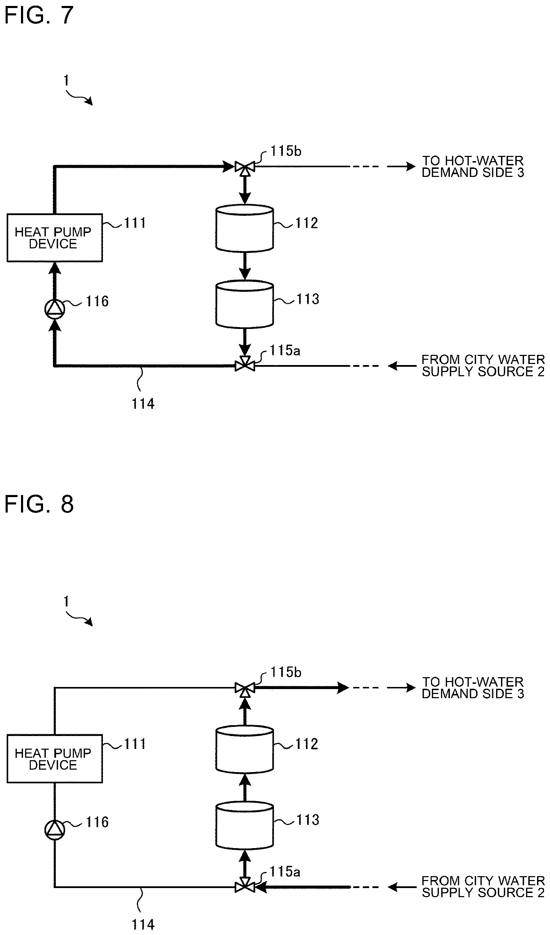

Fig. 7 is a schematic view for explaining the flow of a heat medium during the heat storage operation. In Fig. 7, the thick arrows indicate the flow of the heat medium. Once the heat storage operation is started, the control command device 13 of the controller 10 supplies a control command value to the first heat medium circuit switching device 115a so that the pipes in the lower portion of the heat medium heat storage device 113 and the suction side of the pump 116 become connected. Further, the control command device 13 supplies a control command value to the second heat medium circuit switching device 115b so that the heat pump device 111 and the pipe in the upper portion of the latent heat storage device 112 become connected. Furthermore, the control command device 13 supplies a control command value to the pump 116 so that the pump 116 is driven.

Once the pump 116 is driven based on the control command value, the heat medium stored in the lower portion of the heat medium heat storage device 113 flows out as shown in Fig. 7. At this point in time, the heat medium stored in the lower portion of the heat medium heat storage device 113 always has thermal stratification formed therein, so that the heat medium flowing out from the lower portion of the heat medium heat storage device 113 is always in a low-temperature state.

The low-temperature heat medium flowing out from the heat medium heat storage device 113 is suctioned into the suction side of the pump 116 via the first heat medium circuit switching device 115a, pressurized, and sent out. The heat medium sent out from the pump 116 is heated by the heat pump device 111 and flows out from the heat pump device 111. The high-temperature heat medium flowing out from the heat pump device 111 flows into the latent heat storage device 112 via the second heat medium circuit switching device 115b.

The high-temperature heat medium flowing into the latent heat storage device 112 heats the latent heat storage material and flows out from the latent heat storage device 112. Then, the heat medium flowing out from the latent heat storage device 112 flows into the heat medium heat storage device 113 and is stored.

Thus, in the heat storage operation, the latent heat storage device 112 and the heat medium heat storage device 113 are connected in series, and the latent heat storage device 112 is disposed upstream. This makes it possible to store, in the latent heat storage device 112, the heat of the heat medium thus heated and store the heat medium in the heat medium heat storage device 113.

### (First Hot-water Supply Operation)

A first hot-water supply operation that is performed by the hot-water supply apparatus 1 is described. The hot-water supply operation is an operation for supplying a heat medium at a set hot-water supply temperature to the hot-water demand side 3 for use of a heat medium (water) at a desired temperature on the hot-water demand side 3. Further, the first hot-water supply operation is an operation for supplying a heat medium at a desired hot-water supply temperature to the hot-water demand side 3 through the use of the heat medium stored in the heat medium heat storage device 113.

Fig. 8 is a schematic view for explaining the flow of the heat medium during the first hot-water supply operation. In Fig. 8, the thick arrows indicate the flow of the heat medium. Once the first hot-water supply operation is started, the control command device 13 supplies a control command value to the first heat medium circuit switching device 115a so that the tap water supply source 2 and the pipes in the lower portion of the heat medium heat storage device 113 become connected. Further, the control command device 13 supplies a control command value to the second heat medium circuit switching device 115b so that the pipe in the upper portion of the latent heat storage device 112 and the hot-water demand side 3 become connected.

This causes the heat medium from the tap water supply source 2 to flow into the lower portion of the heat medium heat storage device 113 via the first heat medium circuit switching device 115a as shown in Fig. 8. Once the heat medium flows into the heat medium heat storage device 113, the heat medium stored in the upper portion of the heat medium heat storage device 113 flows out and flows into the latent heat storage device 112.

At this point in time, the heat medium stored in the heat medium heat storage device 113 always has thermal stratification formed therein, so that the heat medium flowing out from the upper portion of the heat medium heat storage device 113 is always in a high-temperature state. Therefore, the heat medium flowing into the latent heat storage device 112 is further heated by the latent heat storage material rejecting heat and flows out from the latent heat storage device 112. The heat medium flowing out from the latent heat storage device 112 is supplied to the hot-water demand side 3 via the second heat medium circuit switching device 115b.

Thus, in the first hot-water supply operation, the heat medium flowing out from the heat medium heat storage device 113 is heated by the latent heat storage device 112, and the heat medium thus heated is supplied to the hot-water demand side 3.

Therefore, even in a case in which hot water runs out due to the disappearance of a high-temperature layer that is formed in the upper portion of the heat medium heat storage device 113, the heat medium is heated by the latent heat storage device 112, so that the hot-water supply apparatus 1 can continue the hot-water supply operation.

### (Second Hot-water Supply Operation)

A second hot-water supply operation that is performed by the hot-water supply apparatus 1 is described. The second hot-water supply operation is an operation that is performed in a case in which heat is not sufficiently stored in the latent heat storage device 112 or the heat medium heat storage device 113.

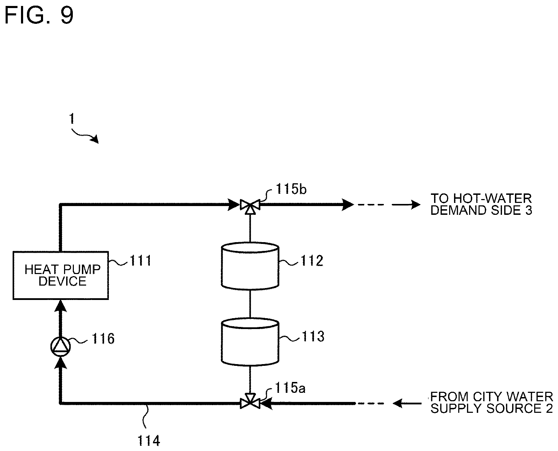

Fig. 9 is a schematic view for explaining the flow of the heat medium during the second hot-water supply operation. In Fig. 9, the thick arrows indicate the flow of the heat medium. Once the second hot-water supply operation is started, the control command device 13 supplies a control command value to the first heat medium circuit switching device 115a so that the tap water supply source 2 and the suction side of the pump 116 become connected. Further, the control command device 13 supplies a control command value to the second heat medium circuit switching device 115b so that the heat pump device 111 and the hot-water demand side 3 become connected. Moreover, the control command device 13 supplies a control command value to the pump 116 so that the pump 116 is driven.

This causes the low-temperature heat medium supplied from the tap water supply source 2 to be suctioned into the suction side of the pump 116 via the first heat medium circuit switching device 115a, pressurized, and sent out as shown in Fig. 9. The heat medium sent out from the pump 116 is heated by the heat pump device 111 and flows out from the heat pump device 111. The high-temperature heat medium flowing out from the heat pump device 111 is supplied to the hot-water demand side 3 via the second heat medium circuit switching device 115b.

Thus, in the second hot-water supply operation, the heat medium supplied from the tap water supply source 2 is heated by the heat pump device 111, and the heat medium thus heated is supplied to the hot-water demand side 3. Therefore, even in a case in which heat is not sufficiently stored in the latent heat storage device 112 or the heat medium heat storage device 113, the heat medium is heated by the heat pump device 111, so that the hot-water supply apparatus 1 can continue the hot-water supply operation. In this case, however, the aforementioned heat storage operation cannot be executed in the second hot-water supply operation, as the heat pump device 111 is used for the hot-water supply operation.

### (Heat Storage Hot-water Supply Process)

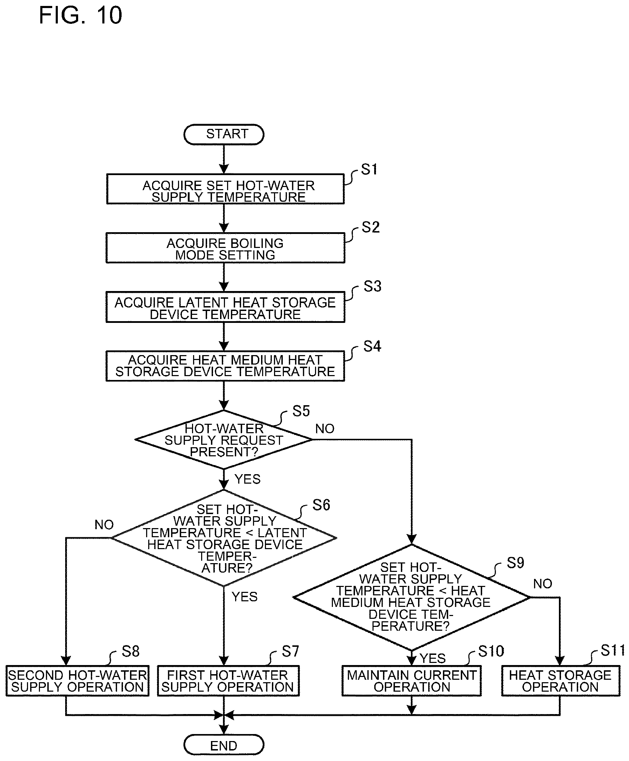

Fig. 10 is a flow chart showing an example of the flow of a heat storage hot-water supply process that is performed by the hot-water supply apparatus according to Embodiment 1. First, in step S1, the control command device 13 of the controller 10 reads out and acquires, from the set value storage area 121 of the data storage device 12, a set hot-water supply temperature set by a user.

In step S2, the control command device 13 reads out and acquires, from the set value storage area 121 of the data storage device 12, a boiling mode being set. The boiling mode is intended to determine which measured values measured by a plurality of temperature-measuring sensors 117 provided in the latent heat storage device 112 and the heat medium heat storage device 113 are referred to. This boiling mode may for example be set to be able to be updated by the user.

In step S3, the control command device 13 reads out and acquires, from the measured value storage area 122 of the data storage device 12, the internal temperature of the latent heat storage device 112 as measured by the sensor 117. In step S4, the control command device 13 reads out and acquires, from the measured value storage area 122 of the data storage device 12, the internal temperature of the heat medium heat storage device 113 as measured by the sensor 117.

In step S5, the control command device 13 determines whether a hot-water supply request is present. The hot-water supply request is received by the control command device 13, for example, in a case in which the control command receiving device 119 receives a hot-water supply start command from the user, a case in which a hot-water supply start time set in advance in the set value storage area 121 of the data storage device 12 is reached, or other cases. This hot-water supply command may for example be set to be updated by the user.

In a case in which the control command device 13 receives the hot-water supply request (step S5: Yes), the process shifts to step S6. In step S6, the heat medium circuit switching determining unit 131 of the control command device 13 makes a comparison between the set hot-water supply temperature acquired in step S1 and the internal temperature of the latent heat storage device 112 as acquired in step S3. In a case in which the set hot-water supply temperature is lower than the internal temperature of the latent heat storage device 112 as a result of the comparison (step S6: Yes), the heat medium circuit switching determining unit 131 determines a connection of the first heat medium circuit switching device 115a and the second heat medium circuit switching device 115b so that the first hot-water supply operation shown in Fig. 8 is performed.

Then, in step S7, the control command value calculating unit 132 of the control command device 13 calculates and generates control command values for the first heat medium circuit switching device 115a and the second heat medium circuit switching device 115b for the first hot-water supply operation to be performed. The control command device 13 supplies the control command values thus generated separately to each of the first and second heat medium circuit switching device 115a and 115b. This causes the first and second heat medium circuit switching devices 115a and 115b to switch from one connecting condition to another according to each separate control command value, so that the first hot-water supply operation is performed in the hot-water supply apparatus 1.

In a case in which the set hot-water supply temperature is higher than or equal to the internal temperature of the latent heat storage device 112 (step S6: No), the heat medium circuit switching determining unit 131 determines a connection of the first heat medium circuit switching device 115a and the second heat medium circuit switching device 115b so that the second hot-water supply operation shown in Fig. 9 is performed. Then, in step S8, the control command value calculating unit 132 calculates and generates control command values for the first heat medium circuit switching device 115a and the second heat medium circuit switching device 115b for the second hot-water supply operation to be performed. The control command device 13 supplies the control command values thus generated separately to each of the first and second heat medium circuit switching devices 115a and 115b. This causes the first and second heat medium circuit switching devices 115a and 115b to switch from one connecting condition to another according to each separate control command value, so that the second hot-water supply operation is performed in the hot-water supply apparatus 1.

On the other hand, in a case in which the control command device 13 does not receive the hot-water supply request in step S5 (step S5: No), the process shifts to step S9. In step S9, the heat medium circuit switching determining unit 131 makes a comparison between the set hot-water supply temperature acquired in step S1 and the internal temperature of the heat medium heat storage device 113 as acquired in step S4. In a case in which the set hot-water supply temperature is lower than the internal temperature of the heat medium heat storage device 113 as a result of the comparison (step S9: Yes), the heat medium circuit switching determining unit 131 makes a determination as to a connection of the first heat medium circuit switching device 115a and the second heat medium circuit switching device 115b in step S10 so that the current operation is maintained.

In this case, the control command value calculating unit 132 calculates control command values for the first heat medium circuit switching device 115a and the second heat medium circuit switching device 115b based on a result of the determination made by the heat medium circuit switching determining unit 131. For example, in a case in which the current operation is the heat storage operation, the control command value calculating unit 132 continues the heat storage operation until heat is fully stored in the latent heat storage device 112 and the heat medium heat storage device 113, and after that, the control command value calculating unit 132 calculates and generates control command values for the first heat medium circuit switching device 115a and the second heat medium circuit switching device 115b for the heat storage operation to be stopped. Further, in a case in which the current operational state is a stopped state, the control command value calculating unit 132 calculates and generates control command values for the first heat medium circuit switching device 115a and the second heat medium circuit switching device 115b for the stopped state to be continued. The control command device 13 supplies the control command values thus generated separately to each of the first and second heat medium circuit switching devices 115a and 115b.

Further, in a case in which the set hot-water supply temperature is higher than or equal to the internal temperature of the heat medium heat storage device 113 (step S9: No), the heat medium circuit switching determining unit 131 determines a connection of the first heat medium circuit switching device 115a and the second heat medium circuit switching device 115b so that the heat storage operation shown in Fig. 7 is performed. Then, in step S11, the control command value calculating unit 132 calculates and generates control command values for the first heat medium circuit switching device 115a and the second heat medium circuit switching device 115b for the heat storage operation to be performed. The control command device 13 supplies the control command values thus generated separately to each of the first and second heat medium circuit switching devices 115a and 115b. This causes the first and second heat medium circuit switching devices 115a and 115b to switch from one connecting condition to another according to each separate control command value, so that the heat storage operation is performed in the hot-water supply apparatus 1.

As noted above, the hot-water supply apparatus 1 according to Embodiment 1 is configured such that a heat medium flowing out from the lower portion of the heat medium heat storage device 113 with thermal stratification formed therein is heated by the heat pump device 111. At this point in time, the heat medium stored in the heat medium heat storage device 113 has thermal stratification formed therein, whereby a heat medium kept at a low temperature flows out from the heat medium heat storage device 113 and heated by the heat pump device 111. This makes it possible to improve energy efficiency in heating by the heat pump device 111 during the heat storage operation. Further, in this case, it is not necessary to cause a decrease in storage of heat per unit time in a heat storage tank. This makes it possible to keep the storage of heat per unit time high.

### Embodiment 2.

Next, Embodiment 2 is described. A hot-water supply apparatus 1 according to Embodiment 2 differs from Embodiment 1 in that the latent heat storage device 112 and the heat medium heat storage device 113 are connected in parallel. Components of Embodiment 2 that are shared in common with Embodiment 1 are given identical reference signs, and a detailed description of such components is omitted.

### [Configuration of Hot-water Supply Apparatus 1]

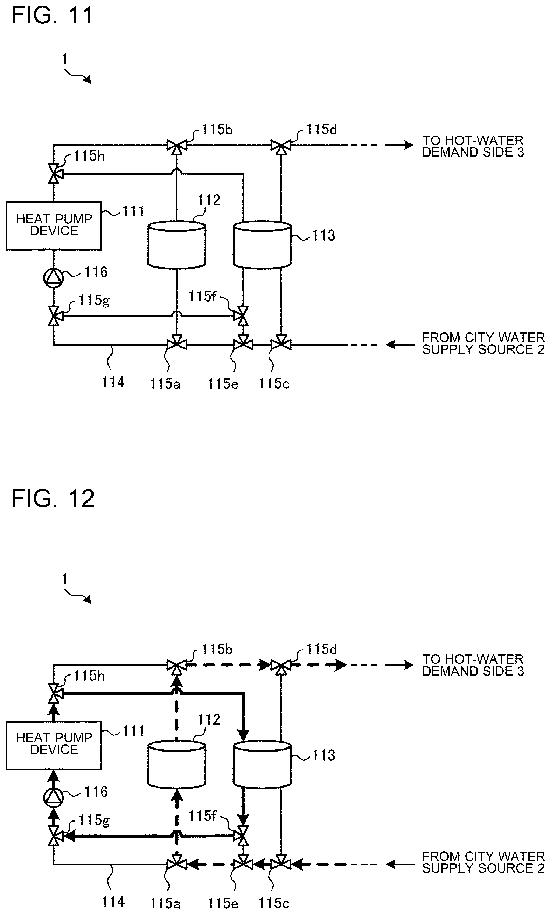

The hot-water supply apparatus 1 according to Embodiment 2 is similar in functional configuration to Embodiment 1 shown in Fig. 1. Fig. 11 is a schematic view showing an example of a circuit configuration of the hot-water supply apparatus according to Embodiment 2. The following describes a relation of connection between one component of the hot-water supply apparatus 1 and another.

In Embodiment 2, the heat medium circuit switching device 115 includes first to eighth heat medium circuit switching devices 115a to 115h. As with the heat medium circuit switching device 115 in Embodiment 1, the first to eighth heat medium circuit switching devices 115a to 115h are for example three-way valves each having three connecting ports.

The first heat medium circuit switching device 115a has connecting ports to each of which the pipe in the lower portion of the latent heat storage device 112, the fifth heat medium circuit switching device 115e, and the seventh heat medium circuit switching device 115g are connected separately. The second heat medium circuit switching device 115b has connecting ports to each of which the pipe in the upper portion of the latent heat storage device 112, the fourth heat medium circuit switching device 115d, and the eighth heat medium circuit switching device 115h are connected separately.

The third heat medium circuit switching device 115c has connecting ports to each of which the tap water supply source 2, one of the pipes in the lower portion of the heat medium heat storage device 113, and the fifth heat medium circuit switching device 115e are connected separately. The fourth heat medium circuit switching device 115d has connecting ports to each of which the hot-water demand side 3, one of the pipes in the upper portion of the heat medium heat storage device 113, and the second heat medium circuit switching device 115b are connected separately.

The fifth heat medium circuit switching device 115e has connecting ports to each of which the first heat medium circuit switching device 115a, the third heat medium circuit switching device 115c, and the sixth heat medium circuit switching device 115f are connected separately. The sixth heat medium circuit switching device 115f has connecting ports to each of which the other of the pipes in the lower portion of the heat medium heat storage device 113, the fifth heat medium circuit switching device 115e, and the seventh heat medium circuit switching device 115g are connected separately.

The seventh heat medium circuit switching device 115g has connecting ports to each of which the suction side of the pump 116, the first heat medium circuit switching device 115a, and the sixth heat medium circuit switching device 115f are connected separately. The eighth heat medium circuit switching device 115h has connecting ports to each of which the heat pump device 111, the other of the pipes in the upper portion of the heat medium heat storage device 113, and the second heat medium circuit switching device 115b are connected separately.

Such a connection between one component and another allows the heat pump device 111 to be connected directly to both the latent heat storage device 112 and the heat medium heat storage device 113 and to supply a heated heat medium to each storage device. This also allows the tap water supply source 2 to be connected directly to both the latent heat storage device 112 and the heat medium heat storage device 113 and to supply a heat medium to each storage device.

### [Actions of Hot-water Supply Apparatus 1]

Actions of the hot-water supply apparatus 1 thus configured are described. The following describes the flow of a heat medium that circulates through the heat medium circuit during a heat storage operation and a hot-water supply operation and a heat storage hot-water supply process.

The hot-water supply apparatus 1 according to Embodiment 2 can perform a first heat storage hot-water supply operation, a second heat storage hot-water supply operation, and a third hot-water supply operation. Further, in a case in which the storage of heat in either of the latent heat storage device 112 and the heat medium heat storage device 113 decreases, the hot-water supply apparatus 1 according to Embodiment 2 can perform a hot-water supply operation through the use of the other heat storage device. Furthermore, while continuing a hot-water supply operation through the use of one of the heat storage devices, the hot-water supply apparatus 1 can store heat in the other of the heat storage devices.

### (First Heat Storage Hot-water Supply Operation)

A first heat storage hot-water supply operation that is performed by the hot-water supply apparatus 1 is described. The first heat storage hot-water supply operation is intended to perform a heat storage operation of heating a low-temperature heat medium with the heat pump device 111 and storing, in the heat medium heat storage device 113, the heat medium thus heated. Further, the first heat storage hot-water supply operation is intended to perform a hot-water supply operation of, through the use of heat stored in the latent heat storage device 112, supplying a heat medium at a set hot-water supply temperature to the hot-water demand side 3.

Fig. 12 is a schematic view for explaining the flow of a heat medium during the first heat storage hot-water supply operation. In Fig. 12, the thick solid arrows indicate the flow of the heat medium during the heat storage operation. Further, the thick dashed arrows indicate the flow of the heat medium during the hot-water supply operation.

Once the first heat storage hot-water supply operation is started, the control command device 13 of the controller 10 supplies a control command value to each of the heat medium circuit switching devices 115 so that the connecting ports of each of the heat medium circuit switching devices 115 are brought into a state shown in Fig. 12.

As a result of this, the first heat medium circuit switching device 115a is switched so that the pipe in the lower portion of the latent heat storage device 112 and the fifth heat medium circuit switching device 115e become connected. The second heat medium circuit switching device 115b is switched so that the pipe in the upper portion of the latent heat storage device 112 and the fourth heat medium circuit switching device 115d become connected.

The third heat medium circuit switching device 115c is switched so that the tap water supply source 2 and the fifth heat medium circuit switching device 115e become connected. The fourth heat medium circuit switching device 115d is switched so that the second heat medium circuit switching device 115b and the hot-water demand side 3 become connected.

The fifth heat medium circuit switching device 115e is switched so that the first heat medium circuit switching device 115a and the third heat medium circuit switching device 115c become connected. The sixth heat medium circuit switching device 115f is switched so that one of the pipes in the lower portion of the heat medium heat storage device 113 and the seventh heat medium circuit switching device 115g become connected.

The seventh heat medium circuit switching device 115g is switched so that the sixth heat medium circuit switching device 115f and the suction side of the pump 116 become connected. The eighth heat medium circuit switching device 115h is switched so that the heat pump device 111 and one of the pipes in the upper portion of the heat medium heat storage device 113 become connected.

Further, the control command device 13 supplies a control command value to the pump 116 so that the pump 116 is driven. Once the pump 116 is driven based on the control command value, the heat medium stored in the lower portion of the heat medium heat storage device 113 flows out as shown in Fig. 12. At this point in time, the heat medium stored in the lower portion of the heat medium heat storage device 113 always has thermal stratification formed therein, so that the heat medium flowing out from the lower portion of the heat medium heat storage device 113 is always in a low-temperature state.

The low-temperature heat medium flowing out from the heat medium heat storage device 113 is suctioned into the suction side of the pump 116 via the sixth heat medium circuit switching device 115f and the seventh heat medium circuit switching device 115g, pressurized, and sent out. The heat medium sent out from the pump 116 is heated by the heat pump device 111 and flows out from the heat pump device 111. The high-temperature heat medium flowing out from the heat pump device 111 flows into the heat medium heat storage device 113 via the eighth heat medium circuit switching device 115h and is stored.

Meanwhile, the heat medium from the tap water supply source 2 flows into the lower portion of the latent heat storage device 112 via the third heat medium circuit switching device 115c, the fifth heat medium circuit switching device 115e, and the first heat medium circuit switching device 115a. The heat medium flowing into the latent heat storage device 112 is heated by the latent heat storage material rejecting heat and flows out from the latent heat storage device 112. The heat medium flowing out from the latent heat storage device 112 is supplied to the hot-water demand side 3 via the second heat medium circuit switching device 115b and the fourth heat medium circuit switching device 115d.

Thus, in the first heat storage hot-water supply operation, both the heat storage operation, which involves the use of the heat medium heat storage device 113, and the hot-water supply operation, which involves the use of the latent heat storage device 112, can be simultaneously performed. It should be noted that the first heat storage hot-water supply operation is performed in a case in which sufficient storage of heat is present in the latent heat storage device 112 but sufficient storage of heat is not present in the heat medium heat storage device 113.

### (Second Heat Storage Hot-water Supply Operation)

A second heat storage hot-water supply operation that is performed by the hot-water supply apparatus 1 is described. The second heat storage hot-water supply operation is intended to perform a heat storage operation of heating a low-temperature heat medium with the heat pump device 111 and storing, in the latent heat storage device 112, the heat medium thus heated. Further, the second heat storage hot-water supply operation is intended to perform a hot-water supply operation of, through the use of heat stored in the heat medium heat storage device 113, supplying a heat medium at a set hot-water supply temperature to the hot-water demand side 3.

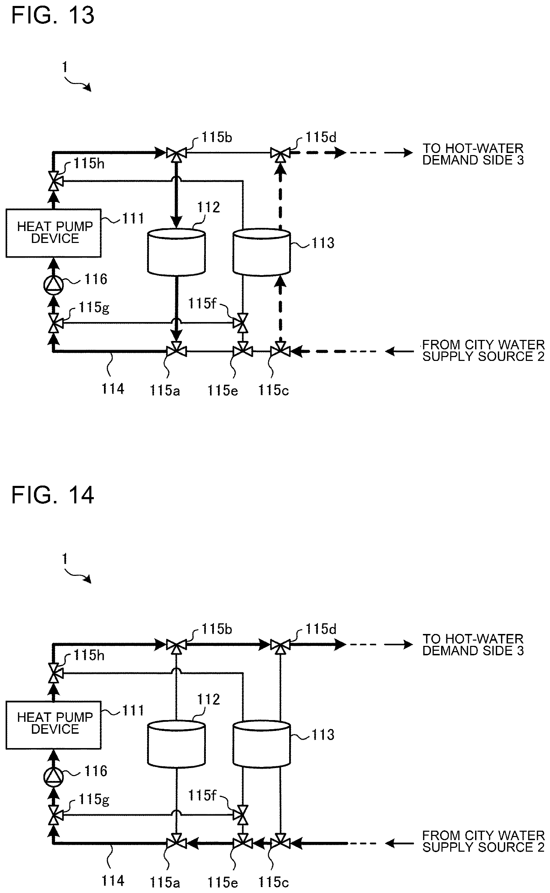

Fig. 13 is a schematic view for explaining the flow of the heat medium during the second heat storage hot-water supply operation. In Fig. 13, the thick solid arrows indicate the flow of the heat medium during the heat storage operation. The thick dashed arrows indicate the flow of the heat medium during the hot-water supply operation.

Once the second heat storage hot-water supply operation is started, the control command device 13 supplies a control command value to each of the heat medium circuit switching devices 115 so that the connecting ports of each of the heat medium circuit switching devices 115 are brought into a state shown in Fig. 13.

As a result of this, the first heat medium circuit switching device 115a is switched so that the pipe in the lower portion of the latent heat storage device 112 and the seventh heat medium circuit switching device 115g become connected. The second heat medium circuit switching device 115b is switched so that the pipe in the upper portion of the latent heat storage device 112 and the eighth heat medium circuit switching device 115h become connected.

The third heat medium circuit switching device 115c is switched so that the tap water supply source 2 and one of the pipes in the lower portion of the heat medium heat storage device 113 become connected. The fourth heat medium circuit switching device 115d is switched so that one of the pipes in the upper portion of the heat medium heat storage device 113 and the hot-water demand side 3 become connected. The fifth heat medium circuit switching device 115e and the sixth heat medium circuit switching device 115f are not used in the second heat storage hot-water supply operation.

The seventh heat medium circuit switching device 115g is switched so that the first heat medium circuit switching device 115a and the suction side of the pump 116 become connected. The eighth heat medium circuit switching device 115h is switched so that the heat pump device 111 and the second heat medium circuit switching device 115b become connected.

Further, the control command device 13 supplies a control command value to the pump 116 so that the pump 116 is driven. Once the pump 116 is driven based on the control command value, the heat medium flows out from the latent heat storage device 112 as shown in Fig. 13. The heat medium flowing out from the latent heat storage device 112 is suctioned into the suction side of the pump 116 via the first heat medium circuit switching device 115a and the seventh heat medium circuit switching device 115g, pressurized, and sent out.

The heat medium sent out from the pump 116 is heated by the heat pump device 111 and flows out from the heat pump device 111. The high-temperature heat medium flowing out from the heat pump device 111 flows into the latent heat storage device 112 via the eighth heat medium circuit switching device 115h and the second heat medium circuit switching device 115b. The high-temperature heat medium flowing into the latent heat storage device 112 heats the latent heat storage material and flows out from the latent heat storage device 112.

Meanwhile, the heat medium from the tap water supply source 2 flows into the lower portion of the heat medium heat storage device 113 via the third heat medium circuit switching device 115c. Once the heat medium flows into the heat medium heat storage device 113, the heat medium stored in the upper portion of the heat medium heat storage device 113 flows out. At this point in time, the heat medium stored in the heat medium heat storage device 113 always has thermal stratification formed therein, so that the heat medium flowing out from the upper portion of the heat medium heat storage device 113 is always in a high-temperature state. The heat medium flowing out from the heat medium heat storage device 113 is supplied to the hot-water demand side 3 via the fourth heat medium circuit switching device 115d.

Thus, in the second heat storage hot-water supply operation, both the heat storage operation and the hot-water supply operation can be simultaneously performed, as in the case of the first heat storage hot-water supply operation. It should be noted that the second heat storage hot-water supply operation is performed in a case in which sufficient storage of heat is not present in the latent heat storage device 112 but sufficient storage of heat is present in the heat medium heat storage device 113.

### (Third Hot-water Supply Operation)

A third hot-water supply operation that is performed by the hot-water supply apparatus 1 is described. The third hot-water supply operation is an operation that is performed with the heat pump device 111 in a case in which heat is not sufficiently stored in the latent heat storage device 112 or the heat medium heat storage device 113.

Fig. 14 is a schematic view for explaining the flow of the heat medium during the third hot-water supply operation. In Fig. 14, the thick arrows indicate the flow of the heat medium. Once the third hot-water supply operation is started, the control command device 13 supplies a control command value to each of the heat medium circuit switching devices 115 so that the connecting ports of each of the heat medium circuit switching devices 115 are brought into a state shown in Fig. 14.

As a result of this, the first heat medium circuit switching device 115a is switched so that the fifth heat medium circuit switching device 115e and the seventh heat medium circuit switching device 115g become connected. The second heat medium circuit switching device 115b is switched so that the fourth heat medium circuit switching device 115d and the eighth heat medium circuit switching device 115h become connected.

The third heat medium circuit switching device 115c is switched so that the tap water supply source 2 and fifth heat medium circuit switching device 115e become connected. The fourth heat medium circuit switching device 115d is switched so that the second heat medium circuit switching device 115b and the hot-water demand side 3 become connected.

The fifth heat medium circuit switching device 115e is switched so that the first heat medium circuit switching device 115a and the third heat medium circuit switching device 115c become connected. The sixth heat medium circuit switching device 115f is not used in the third hot-water supply operation.

The seventh heat medium circuit switching device 115g is switched so that the first heat medium circuit switching device 115a and the suction side of the pump 116 become connected. The eighth heat medium circuit switching device 115h is switched so that the heat pump device 111 and the second heat medium circuit switching device 115b become connected.

Further, the control command device 13 supplies a control command value to the pump 116 so that the pump 116 is driven. Once the pump 116 is driven based on the control command value, the low-temperature heat medium supplied from the tap water supply source 2 is suctioned into the suction side of the pump 116 via the third heat medium circuit switching device 115c, the fifth heat medium circuit switching device 115e, the first heat medium circuit switching device 115a, and the seventh heat medium circuit switching device 115g, pressurized, and sent out as shown in Fig. 14.

The heat medium sent out from the pump 116 is heated by the heat pump device 111 and flows out from the heat pump device 111. The high-temperature heat medium flowing out from the heat pump device 111 is supplied to the hot-water demand side 3 via the eighth heat medium circuit switching device 115h, the second heat medium circuit switching device 115b, and the fourth heat medium circuit switching device 115d.

Thus, in the third hot-water supply operation, the heat medium supplied from the tap water supply source 2 is heated by the heat pump device 111, and the heat medium thus heated is supplied to the hot-water demand side 3. Therefore, even in a case in which heat is not sufficiently stored in the latent heat storage device 112 or the heat medium heat storage device 113, the heat medium is heated by the heat pump device 111, so that the hot-water supply apparatus 1 can continue the hot-water supply operation. In this case, however, the aforementioned heat storage operation cannot be executed in the third hot-water supply operation, as the heat pump device 111 is used for the hot-water supply operation.

### (Heat Storage Hot-water Supply Process)

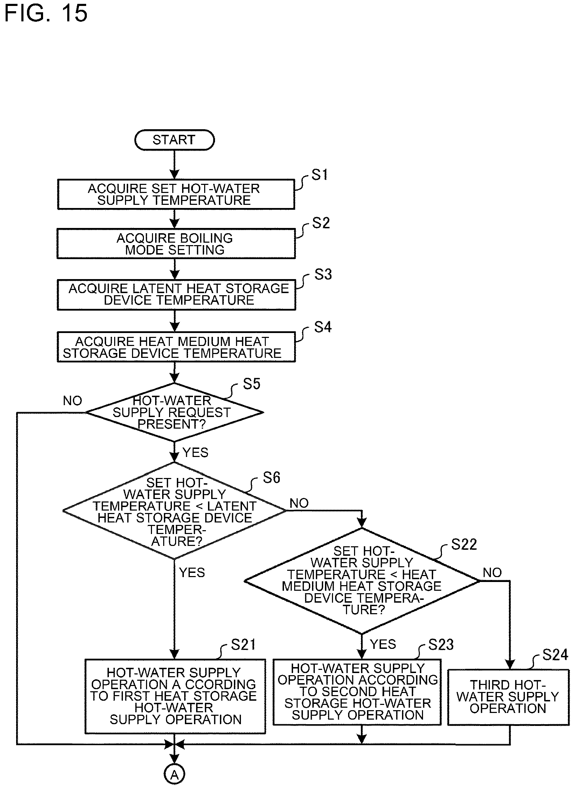

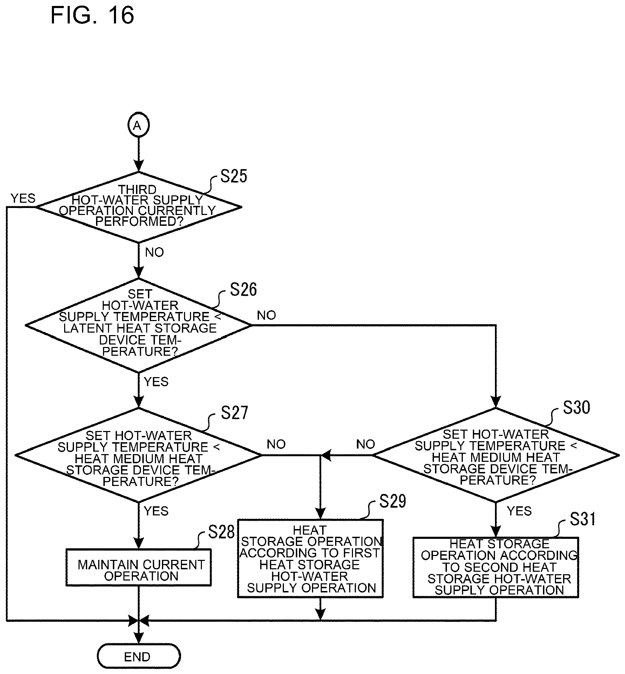

Figs. 15 and 16 are flow charts showing an example of a heat storage hot-water supply process that is performed by the hot-water supply apparatus according to Embodiment 2. Steps of the process shown in Figs. 15 and 16 that are shared common with Embodiment 1 are given identical reference signs, and a detailed description of such steps is omitted. In the flow charts shown in Figs. 15 and 16, symbol A indicates that the process shifts to the corresponding symbol. The processes in steps S1 to S4, which are shared in common with Embodiment 1, are not described here.

In step S5, the control command device 13 of the controller 10 determines whether a hot-water supply request is present. In a case in which the control command device 13 receives the hot-water supply request (step S5: Yes), the process shifts to step S6. On the other hand, in a case in which the control command device 13 does not receive the hot-water supply request in step S5 (step S5: No), the process shifts to step S25.

In step S6, the heat medium circuit switching determining unit 131 of the control command device 13 makes a comparison between the set hot-water supply temperature acquired in step S1 and the internal temperature of the latent heat storage device 112 as acquired in step S3. In a case in which the set hot-water supply temperature is lower than the internal temperature of the latent heat storage device 112 as a result of the comparison (step S6: Yes), the heat medium circuit switching determining unit 131 determines a connection of each heat medium circuit switching device 115 so that the first heat storage hot-water supply operation shown in Fig. 12 is performed.

Then, in step S21, the control command value calculating unit 132 of the control command device 13 calculates and generates control command values for each separate heat medium circuit switching device 115 for the first heat storage hot-water supply operation to be performed. The control command device 13 supplies the control command values thus generated separately to each heat medium circuit switching device 115. This causes the hot-water supply apparatus 1 to perform a hot-water supply operation according to the first heat storage hot-water supply operation.

Further, in a case in which the set hot-water supply temperature is higher than or equal to the internal temperature of the latent heat storage device 112 (step S6: No), the process shifts to step S22. In step S22, the heat medium circuit switching determining unit 131 makes a comparison between the set hot-water supply temperature acquired in step S1 and the internal temperature of the heat medium heat storage device 113 as acquired in step S4. In a case in which the set hot-water supply temperature is lower than the internal temperature of the heat medium heat storage device 113 as a result of the comparison (step S22: Yes), the heat medium circuit switching determining unit 131 determines a connection of each heat medium circuit switching device 115 so that the second heat storage hot-water supply operation shown in Fig. 13 is performed.

Then, in step S23, the control command value calculating unit 132 calculates and generates control command values for each separate heat medium circuit switching device 115. The control command device 13 supplies the control command values thus generated separately to each heat medium circuit switching device 115. This causes the hot-water supply apparatus 1 to perform a hot-water supply operation according to the second heat storage hot-water supply operation.

Further, in a case in which the set hot-water supply temperature is higher than or equal to the internal temperature of the heat medium heat storage device 113 (step S22: No), the heat medium circuit switching determining unit 131 determines a connection of each heat medium circuit switching device 115 so that the third hot-water supply operation shown in Fig. 14 is performed. Then, in step S24, the control command value calculating unit 132 calculates and generates control command values for each separate heat medium circuit switching device 115. The control command device 13 supplies the control command values thus generated separately to each heat medium circuit switching device 115. This causes the hot-water supply apparatus 1 to perform the third hot-water supply operation.

Next, in step S25, the control command device 13 determines whether the current hot-water supply operation is a hot-water supply operation during which hot water is supplied directly from the heat pump device 111, that is, the third hot-water supply operation. In a case in which the third hot-water supply operation is currently performed (step S25: Yes), the heat storage operation is not performed, and the series of processes ends. On the other hand, in a case in which he third hot-water supply operation is not currently performed (step S25: No), the process shifts to step S26.

In step S26, the heat medium circuit switching determining unit 131 makes a comparison between the set hot-water supply temperature and the internal temperature of the latent heat storage device 112. In a case in which the set hot-water supply temperature is lower than the internal temperature of the latent heat storage device 112 as a result of the comparison (step S26: Yes), the process shifts to step S27. In step S27, the heat medium circuit switching determining unit 131 makes a comparison between the set hot-water supply temperature and the internal temperature of the heat medium heat storage device 113.

In a case in which the set hot-water supply temperature is lower than the internal temperature of the heat medium heat storage device 113 as a result of the comparison (step S27: Yes), the heat medium circuit switching determining unit 131 makes a determination as to a connection of each heat medium circuit switching device 115 in step S28 so that the current operation is maintained. In this case, the control command value calculating unit 132 calculates control command values for each separate heat medium circuit switching device 115 based on a result of the determination made by the heat medium circuit switching determining unit 131.

For example, in a case in which the current operation is the heat storage operation, the control command value calculating unit 132 continues the heat storage operation until heat is fully stored in the latent heat storage device 112 and the heat medium heat storage device 113, and after that, the control command value calculating unit 132 calculates and generates control command values for each separate heat medium circuit switching device 115 for the heat storage operation to be stopped. Further, in a case in which the current operational state is a stopped state, the control command value calculating unit 132 calculates and generates control command values for each separate heat medium circuit switching device 115 for the stopped state to be continued. The control command device 13 supplies the control command values thus generated separately to each heat medium circuit switching device 115. Further, in a case in which the set hot-water supply temperature is higher than or equal to the internal temperature of the heat medium heat storage device 113 (step S27: No), the heat medium circuit switching determining unit 131 determines a connection of each heat medium circuit switching device 115 so that the first heat storage hot-water supply operation shown in Fig. 12 is performed.

Then, in step S29, the control command value calculating unit 132 calculates and generates control command values for each separate heat medium circuit switching device 115 for the first heat storage hot-water supply operation to be performed. The control command device 13 supplies the control command values thus generated separately to each heat medium circuit switching device 115. This causes the hot-water supply apparatus 1 to perform a heat storage operation according to the first heat storage hot-water supply operation.

On the other hand, in a case in which the set hot-water supply temperature is higher than or equal to the internal temperature of the latent heat storage device 112 in step S26 (step S26: No), the process shifts to step S30. In step S30, the heat medium circuit switching determining unit 131 makes a comparison between the set hot-water supply temperature and the internal temperature of the heat medium heat storage device 113.

In a case in which the set hot-water supply temperature is higher than or equal to the internal temperature of the heat medium heat storage device 113 as a result of the comparison (step S30: No), the process shifts to step S29, in which a heat storage operation according to the first heat storage hot-water supply operation is performed.

Further, in a case in which the set hot-water supply temperature is lower the internal temperature of the heat medium heat storage device 113 (step S30: Yes), the heat medium circuit switching determining unit 131 determines a connection of each heat medium circuit switching device 115 so that the second heat storage hot-water supply operation shown in Fig. 13 is performed. Then, in step S31, the control command value calculating unit 132 calculates and generates control command values for each separate heat medium circuit switching device 115. The control command device 13 supplies the control command values thus generated separately to each heat medium circuit switching device 115.

This causes the hot-water supply apparatus 1 to perform a heat storage operation according to the second heat storage hot-water supply operation.

As noted above, the hot-water supply apparatus 1 according to Embodiment 2 can bring about effects that are similar to those of Embodiment 1. Further, in the hot-water supply apparatus 1, the latent heat storage device 112 and the heat medium heat storage device 113 are connected in parallel. As a result of this, in a case in which the storage of heat in either of the two heat storage devices decreases, a heat storage operation on one storage device and a hot-water supply operation involving the use of the other heat storage device can be simultaneously performed.

### Embodiment 3.

Next, Embodiment 3 is described. A hot-water supply apparatus 1 according to Embodiment 3 differs from Embodiments 1 and 2 in that the latent heat storage device 112 and the heat medium heat storage device 113 are connected in series or in parallel. Components of Embodiment 3 that are shared in common with Embodiments 1 and 2 are given identical reference signs, and a detailed description of such components is omitted.

### [Configuration of Hot-water Supply Apparatus 1]

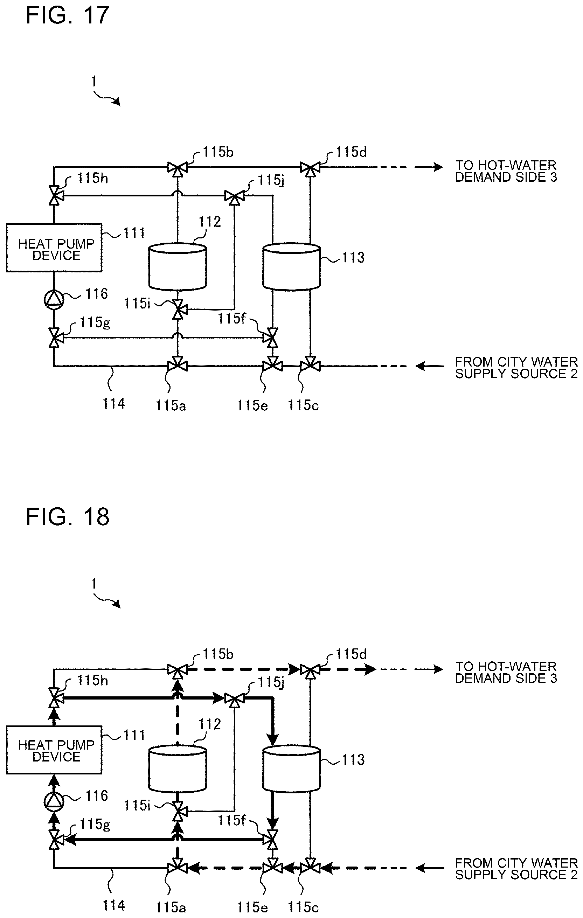

The hot-water supply apparatus 1 according to Embodiment 3 is similar in functional configuration to Embodiments 1 and 2 shown in Fig. 1. Fig. 17 is a schematic view showing an example of a circuit configuration of the hot-water supply apparatus according to Embodiment 3. The following describes a relation of connection between one component of the hot-water supply apparatus 1 and another.

In Embodiment 3, the heat medium circuit switching device 115 includes first to tenth heat medium circuit switching devices 115a to 115j. As with the heat medium circuit switching devices 115 in Embodiments 1 and 2, the first to tenth heat medium circuit switching devices 115a to 115j are for example three-way valves each having three connecting ports.

The first heat medium circuit switching device 115a has connecting ports to each of which the fifth heat medium circuit switching device 115e, the seventh heat medium circuit switching device 115g, and the ninth heat medium circuit switching device 115i are connected separately. The second heat medium circuit switching device 115b has connecting ports to each of which the pipe in the upper portion of the latent heat storage device 112, the fourth heat medium circuit switching device 115d, and the eighth heat medium circuit switching device 115h are connected separately.

The third heat medium circuit switching device 115c has connecting ports to each of which the tap water supply source 2, one of the pipes in the lower portion of the heat medium heat storage device 113, and the fifth heat medium circuit switching device 115e are connected separately. The fourth heat medium circuit switching device 115d has connecting ports to each of which the hot-water demand side 3, one of the pipes in the upper portion of the heat medium heat storage device 113, and the second heat medium circuit switching device 115b are connected separately.

The fifth heat medium circuit switching device 115e has connecting ports to each of which the first heat medium circuit switching device 115a, the third heat medium circuit switching device 115c, and the sixth heat medium circuit switching device 115f are connected separately. The sixth heat medium circuit switching device 115f has connecting ports to each of which the other of the pipes in the lower portion of the heat medium heat storage device 113, the fifth heat medium circuit switching device 115e, and the seventh heat medium circuit switching device 115g are connected separately.

The seventh heat medium circuit switching device 115g has connecting ports to each of which the suction side of the pump 116, the first heat medium circuit switching device 115a, and the sixth heat medium circuit switching device 115f are connected separately. The eighth heat medium circuit switching device 115h has connecting ports to each of which the heat pump device 111, the second heat medium circuit switching device 115b, and the tenth heat medium circuit switching device 115j are connected separately.

The ninth heat medium circuit switching device 115i has connecting ports to each of which the pipe in the lower portion of the latent heat storage device 112, the first heat medium circuit switching device 115a, and the tenth heat medium circuit switching device 115j are connected separately. The tenth heat medium circuit switching device 115j has connecting ports to each of which the other of the pipes in the upper portion of the heat medium heat storage device 113, the eighth heat medium circuit switching device 115h and the ninth heat medium circuit switching device 115i are connected separately.

### [Actions of Hot-water Supply Apparatus 1]

Actions of the hot-water supply apparatus 1 thus configured are described. The following describes the flow of a heat medium that circulates through the heat medium circuit during a heat storage operation and a hot-water supply operation and a heat storage hot-water supply process. The hot-water supply apparatus 1 according to Embodiment 3 can perform a first heat storage hot-water supply operation, a second heat storage hot-water supply operation, and a third hot-water supply operation.

### (Third Heat Storage Hot-water Supply Operation)

A third heat storage hot-water supply operation that is performed by the hot-water supply apparatus 1 is described. As with the first heat storage hot-water supply operation in Embodiment 2, the third heat storage hot-water supply operation is intended to perform a heat storage operation of heating a low-temperature heat medium with the heat pump device 111 and storing, in the heat medium heat storage device 113, the heat medium thus heated. Further, the third heat storage hot-water supply operation is intended to perform a hot-water supply operation of, through the use of heat stored in the latent heat storage device 112, supplying a heat medium at a set hot-water supply temperature to the hot-water demand side 3.

Fig. 18 is a schematic view for explaining the flow of a heat medium during the third heat storage hot-water supply operation. In Fig. 18, the thick solid arrows indicate the flow of the heat medium during the heat storage operation. The thick dashed arrows indicate the flow of the heat medium during the hot-water supply operation. Once the third heat storage hot-water supply operation is started, the control command device 13 of the controller 10 supplies a control command value to each of the heat medium circuit switching devices 115 so that the connecting ports of each of the heat medium circuit switching devices 115 are brought into a state shown in Fig. 18.

As a result of this, the first heat medium circuit switching device 115a is switched so that the fifth heat medium circuit switching device 115e and the ninth heat medium circuit switching device 115i become connected. The second heat medium circuit switching device 115b is switched so that the pipe in the upper portion of the latent heat storage device 112 and the fourth heat medium circuit switching device 115d become connected.

The third heat medium circuit switching device 115c is switched so that the tap water supply source 2 and the fifth heat medium circuit switching device 115e become connected. The fourth heat medium circuit switching device 115d is switched so that the second heat medium circuit switching device 115b and the hot-water demand side 3 become connected.

The fifth heat medium circuit switching device 115e is switched so that the first heat medium circuit switching device 115a and the third heat medium circuit switching device 115c become connected. The sixth heat medium circuit switching device 115f is switched so that one of the pipes in the lower portion of the heat medium heat storage device 113 and the seventh heat medium circuit switching device 115g become connected.

The seventh heat medium circuit switching device 115g is switched so that the sixth heat medium circuit switching device 115f and the suction side of the pump 116 become connected. The eighth heat medium circuit switching device 115h is switched so that the heat pump device 111 and the tenth heat medium circuit switching device 115j become connected.

The ninth heat medium circuit switching device 115i is switched so that the pipe in the lower portion of the latent heat storage device 112 and the first heat medium circuit switching device 115a become connected. The tenth heat medium circuit switching device 115j is switched so that one of the pipes in the upper portion of the heat medium heat storage device 113 and the eighth heat medium circuit switching device 115h become connected.

Further, the control command device 13 supplies a control command value to the pump 116 so that the pump 116 is driven. Once the pump 116 is driven based on the control command value, the heat medium stored in the lower portion of the heat medium heat storage device 113 flows out as shown in Fig. 18. At this point in time, the heat medium stored in the lower portion of the heat medium heat storage device 113 always has thermal stratification formed therein, so that the heat medium flowing out from the lower portion of the heat medium heat storage device 113 is always in a low-temperature state.

The low-temperature heat medium flowing out from the heat medium heat storage device 113 is suctioned into the suction side of the pump 116 via the sixth heat medium circuit switching device 115f and the seventh heat medium circuit switching device 115g, pressurized, and sent out. The heat medium sent out from the pump 116 is heated by the heat pump device 111 and flows out from the heat pump device 111. The high-temperature heat medium flowing out from the heat pump device 111 flows into the heat medium heat storage device 113 via the eighth heat medium circuit switching device 115h and the tenth heat medium circuit switching device 115j and is stored.

Meanwhile, the heat medium from the tap water supply source 2 flows into the lower portion of the latent heat storage device 112 via the third heat medium circuit switching device 115c, the fifth heat medium circuit switching device 115e, the first heat medium circuit switching device 115a, and the ninth heat medium circuit switching device 115i.

The heat medium flowing into the latent heat storage device 112 is heated by the latent heat storage material rejecting heat and flows out from the latent heat storage device 112. The heat medium flowing out from the latent heat storage device 112 is supplied to the hot-water demand side 3 via the second heat medium circuit switching device 115b and the fourth heat medium circuit switching device 115d.

Thus, in the third heat storage hot-water supply operation, both the heat storage operation and the hot-water supply operation can be simultaneously performed as in the case of the first heat storage hot-water supply operation of Embodiment 2. It should be noted that the third heat storage hot-water supply operation is performed in a case in which sufficient storage of heat is present in the latent heat storage device 112 but sufficient storage of heat is not present in the heat medium heat storage device 113.

### (Fourth Heat Storage Hot-water Supply Operation)

A second heat storage hot-water supply operation that is performed by the hot-water supply apparatus 1 is described. The fourth heat storage hot-water supply operation is intended to perform a heat storage operation of heating a low-temperature heat medium with the heat pump device 111, storing, in the latent heat storage device 112, the heat medium thus heated, and storing the high-temperature heat medium in the heat medium heat storage device 113. Further, the fourth heat storage hot-water supply operation is intended to perform a hot-water supply operation of, through the use of heat stored in the heat medium heat storage device 113, supplying a heat medium at a set hot-water supply temperature to the hot-water demand side 3.

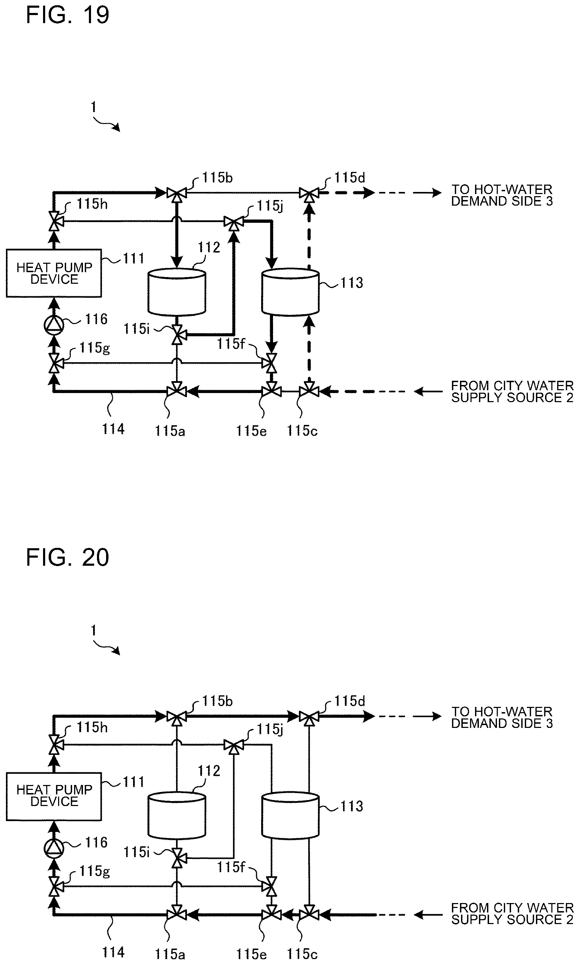

Fig. 19 is a schematic view for explaining the flow of the heat medium during the fourth heat storage hot-water supply operation. In Fig. 19, the thick solid arrows indicate the flow of the heat medium during the heat storage operation. The thick dashed arrows indicate the flow of the heat medium during the hot-water supply operation. Once the fourth heat storage hot-water supply operation is started, the control command device 13 supplies a control command value to each of the heat medium circuit switching devices 115 so that the connecting ports of each of the heat medium circuit switching devices 115 are brought into a state shown in Fig. 19.

As a result of this, the first heat medium circuit switching device 115a is switched so that the fifth heat medium circuit switching device 115e and the seventh heat medium circuit switching device 115g become connected. The second heat medium circuit switching device 115b is switched so that the pipe in the upper portion of the latent heat storage device 112 and the eighth heat medium circuit switching device 115h become connected.

The third heat medium circuit switching device 115c is switched so that the tap water supply source 2 and one of the pipes in the lower portion of the heat medium heat storage device 113 become connected. The fourth heat medium circuit switching device 115d is switched so that one of the pipes in the upper portion of the heat medium heat storage device 113 and the hot-water demand side 3 become connected.

The fifth heat medium circuit switching device 115e is switched so that the first heat medium circuit switching device 115a and the sixth heat medium circuit switching device 115f become connected. The sixth heat medium circuit switching device 115f is switched so that the other of the pipes in the lower portion of the heat medium heat storage device 113 and the fifth heat medium circuit switching device 115e become connected.

The seventh heat medium circuit switching device 115g is switched so that the first heat medium circuit switching device 115a and the suction side of the pump 116 become connected. The eighth heat medium circuit switching device 115h is switched so that the heat pump device 111 and the second heat medium circuit switching device 115b become connected.

The ninth heat medium circuit switching device 115i is switched so that the pipe in the lower portion of the latent heat storage device 112 and the tenth heat medium circuit switching device 115j become connected. The tenth heat medium circuit switching device 115j is switched so that the other of the pipes in the upper portion of the heat medium heat storage device 113 and the ninth heat medium circuit switching device 115i become connected.

Further, the control command device 13 supplies a control command value to the pump 116 so that the pump 116 is driven. Once the pump 116 is driven based on the control command value, the heat medium stored in the lower portion of the heat medium heat storage device 113 flows out as shown in Fig. 19. At this point in time, the heat medium stored in the lower portion of the heat medium heat storage device 113 always has thermal stratification formed therein, so that the heat medium flowing out from the lower portion of the heat medium heat storage device 113 is always in a low-temperature state.

The low-temperature heat medium flowing out from the heat medium heat storage device 113 is suctioned into the suction side of the pump 116 via the sixth heat medium circuit switching device 115f, the fifth heat medium circuit switching device 115e, the first heat medium circuit switching device 115a, and the seventh heat medium circuit switching device 115g, pressurized, and sent out.

The heat medium sent out from the pump 116 is heated by the heat pump device 111 and flows out from the heat pump device 111. The high-temperature heat medium flowing out from the heat pump device 111 flows into the latent heat storage device 112 via the eighth heat medium circuit switching device 115h and the second heat medium circuit switching device 115b. The high-temperature heat medium flowing into the latent heat storage device 112 heats the latent heat storage material and flows out from the latent heat storage device 112. Then, the heat medium flowing out from the latent heat storage device 112 flows into the heat medium heat storage device 113 via the ninth heat medium circuit switching device 115i and the tenth heat medium circuit switching device 115j and is stored.

Meanwhile, the heat medium from the tap water supply source 2 flows into the lower portion of the heat medium heat storage device 113 via the third heat medium circuit switching device 115c. Once the heat medium flows into the heat medium heat storage device 113, the heat medium stored in the upper portion of the heat medium heat storage device 113 flows out. At this point in time, the heat medium stored in the heat medium heat storage device 113 always has thermal stratification formed therein, so that the heat medium flowing out from the upper portion of the heat medium heat storage device 113 is always in a high-temperature state. The heat medium flowing out from the heat medium heat storage device 113 is supplied to the hot-water demand side 3 via the fourth heat medium circuit switching device 115d.

Thus, in the fourth heat storage hot-water supply operation, both the heat storage operation and the hot-water supply operation can be simultaneously performed, as in the case of the third heat storage hot-water supply operation. It should be noted that the fourth heat storage hot-water supply operation is performed in a case in which sufficient storage of heat is not present in the latent heat storage device 112 but sufficient storage of heat is present in the heat medium heat storage device 113.

### (Fourth Hot-water Supply Operation)

A third hot-water supply operation that is performed by the hot-water supply apparatus 1 is described. The fourth hot-water supply operation is an operation that is performed in a case in which heat is not sufficiently stored in the latent heat storage device 112 or the heat medium heat storage device 113.

Fig. 20 is a schematic view for explaining the flow of the heat medium during the fourth hot-water supply operation. In Fig. 20, the thick arrows indicate the flow of the heat medium. Once the fourth hot-water supply operation is started, the control command device 13 supplies a control command value to each of the heat medium circuit switching devices 115 so that the connecting ports of each of the heat medium circuit switching devices 115 are brought into a state shown in Fig. 20.

As a result of this, the first heat medium circuit switching device 115a is switched so that the fifth heat medium circuit switching device 115e and the seventh heat medium circuit switching device 115g become connected. The second heat medium circuit switching device 115b is switched so that the fourth heat medium circuit switching device 115d and the eighth heat medium circuit switching device 115h become connected.

The third heat medium circuit switching device 115c is switched so that the tap water supply source 2 and the fifth heat medium circuit switching device 115e become connected. The fourth heat medium circuit switching device 115d is switched so that the second heat medium circuit switching device 115b and the hot-water demand side 3 become connected.

The fifth heat medium circuit switching device 115e is switched so that the first heat medium circuit switching device 115a and the third heat medium circuit switching device 115c become connected. The sixth heat medium circuit switching device 115f is not used in the third hot-water supply operation.

The seventh heat medium circuit switching device 115g is switched so that the first heat medium circuit switching device 115a and the suction side of the pump 116 become connected. The eighth heat medium circuit switching device 115h is switched so that the heat pump device 111 and the second heat medium circuit switching device 115b become connected. The ninth heat medium circuit switching device 115i and the tenth heat medium circuit switching device 115j are not used in the third hot-water supply operation.

Further, the control command device 13 supplies a control command value to the pump 116 so that the pump 116 is driven. Once the pump 116 is driven based on the control command value, the low-temperature heat medium supplied from the tap water supply source 2 is suctioned into the suction side of the pump 116 via the third heat medium circuit switching device 115c, the fifth heat medium circuit switching device 115e, the first heat medium circuit switching device 115a, and the seventh heat medium circuit switching device 115g, pressurized, and sent out as shown in Fig. 20.

The heat medium sent out from the pump 116 is heated by the heat pump device 111 and flows out from the heat pump device 111. The high-temperature heat medium flowing out from the heat pump device 111 is supplied to the hot-water demand side 3 via the eighth heat medium circuit switching device 115h, the second heat medium circuit switching device 115b, and the fourth heat medium circuit switching device 115d.

Thus, in the fourth hot-water supply operation, the heat medium supplied from the tap water supply source 2 is heated by the heat pump device 111, and the heat medium thus heated is supplied to the hot-water demand side 3. Therefore, even in a case in which heat is not sufficiently stored in the latent heat storage device 112 or the heat medium heat storage device 113, the heat medium is heated by the heat pump device 111, so that the hot-water supply apparatus 1 can continue the hot-water supply operation. In this case, however, the aforementioned heat storage operation cannot be executed in the fourth hot-water supply operation, as the heat pump device 111 is used for the hot-water supply operation.

### (Heat Storage Hot-water Supply Process)

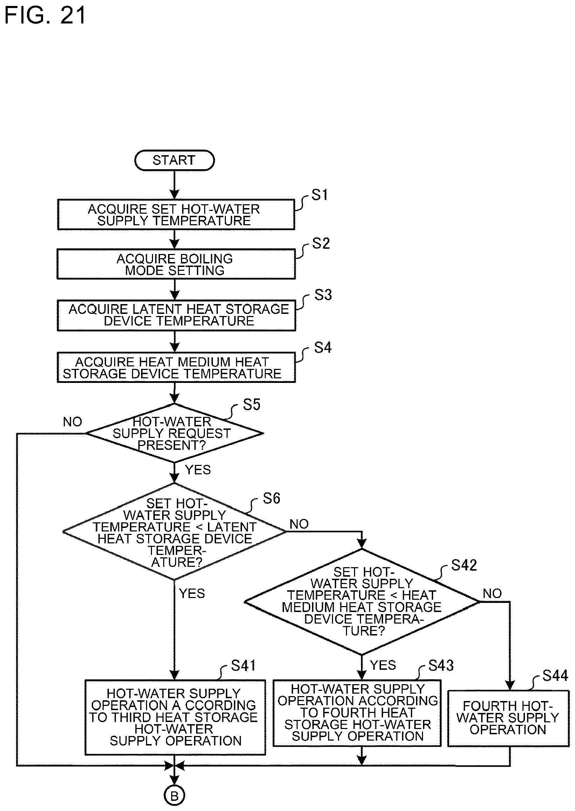

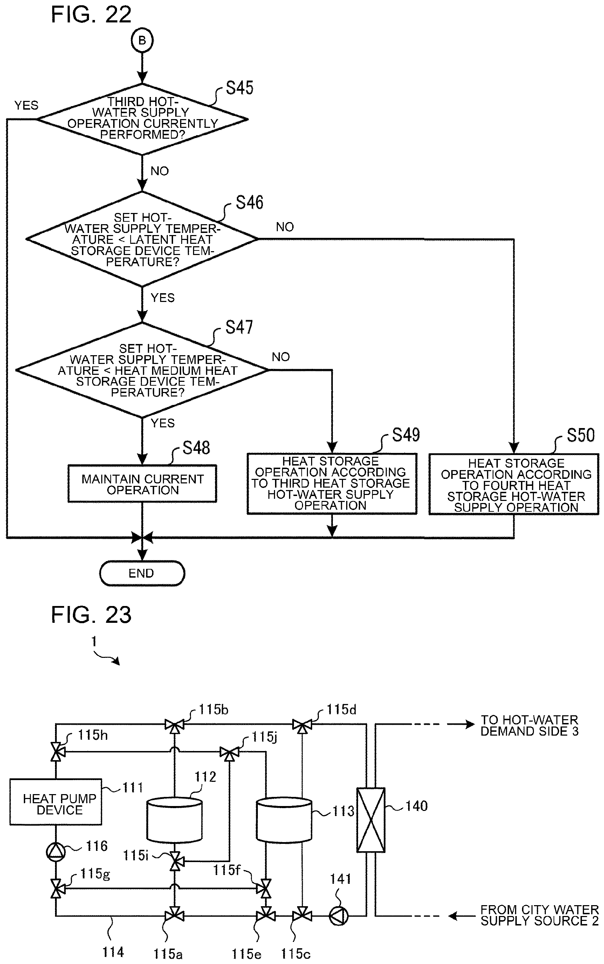

Figs. 21 and 22 are flow charts showing an example of a heat storage hot-water supply process that is performed by the hot-water supply apparatus according to Embodiment 3. Steps of the process shown in Figs. 21 and 22 that are shared common with Embodiments 1 and 2 are given identical reference signs, and a detailed description of such steps is omitted. In the flow charts shown in Figs. 21 and 22, symbol B indicates that the process shifts to the corresponding symbol. The processes in steps S1 to S4, which are shared in common with Embodiment 1, are not described here.

In step S5, the control command device 13 of the controller 10 determines whether a hot-water supply request is present. In a case in which the control command device 13 receives the hot-water supply request (step S5: Yes), the process shifts to step S6. On the other hand, in a case in which the control command device 13 does not receive the hot-water supply request in step S5 (step S5: No), the process shifts to step S45.

In step S6, the heat medium circuit switching determining unit 131 of the control command device 13 makes a comparison between the set hot-water supply temperature acquired in step S1 and the internal temperature of the latent heat storage device 112 as acquired in step S3. In a case in which the set hot-water supply temperature is lower than the internal temperature of the latent heat storage device 112 as a result of the comparison (step S6: Yes), the heat medium circuit switching determining unit 131 determines a connection of each heat medium circuit switching device 115 so that the third heat storage hot-water supply operation shown in Fig. 18 is performed.

Then, in step S41, the control command value calculating unit 132 of the control command device 13 calculates and generates control command values for each separate heat medium circuit switching device 115 for the third heat storage hot-water supply operation to be performed. The control command device 13 supplies the control command values thus generated separately to each heat medium circuit switching device 115. This causes the hot-water supply apparatus 1 to perform a hot-water supply operation according to the third heat storage hot-water supply operation.

Further, in a case in which the set hot-water supply temperature is higher than or equal to the internal temperature of the latent heat storage device 112 (step S6: No), the process shifts to step S42. In step S42, the heat medium circuit switching determining unit 131 makes a comparison between the set hot-water supply temperature acquired in step S1 and the internal temperature of the heat medium heat storage device 113 as acquired in step S4. In a case in which the set hot-water supply temperature is lower than the internal temperature of the heat medium heat storage device 113 as a result of the comparison (step S42: Yes), the heat medium circuit switching determining unit 131 determines a connection of each heat medium circuit switching device 115 so that the fourth heat storage hot-water supply operation shown in Fig. 19 is performed.

Then, in step S43, the control command value calculating unit 132 calculates and generates control command values for each separate heat medium circuit switching device 115. The control command device 13 supplies the control command values thus generated separately to each heat medium circuit switching device 115. This causes the hot-water supply apparatus 1 to perform a hot-water supply operation according to the fourth heat storage hot-water supply operation.

Further, in a case in which the set hot-water supply temperature is higher than or equal to the internal temperature of the heat medium heat storage device 113 (step S42: No), the heat medium circuit switching determining unit 131 determines a connection of each heat medium circuit switching device 115 so that the fourth hot-water supply operation shown in Fig. 20 is performed. Then, in step S44, the control command value calculating unit 132 calculates and generates control command values for each separate heat medium circuit switching device 115. The control command device 13 supplies the control command values thus generated separately to each heat medium circuit switching device 115. This causes the hot-water supply apparatus 1 to perform the fourth hot-water supply operation.

Next, in step S45, the control command device 13 determines whether the current hot-water supply operation is a hot-water supply operation during which hot water is supplied directly from the heat pump device 111, that is, the fourth hot-water supply operation. In a case in which the fourth hot-water supply operation is currently performed (step S45: Yes), the heat storage operation is not performed, and the series of processes ends. On the other hand, in a case in which the fourth hot-water supply operation is not currently performed (step S45: No), the process shifts to step S46.

In step S46, the heat medium circuit switching determining unit 131 makes a comparison between the set hot-water supply temperature and the internal temperature of the latent heat storage device 112. In a case in which the set hot-water supply temperature is lower than the internal temperature of the latent heat storage device 112 as a result of the comparison (step S46: Yes), the process shifts to step S47.

In step S47, the heat medium circuit switching determining unit 131 makes a comparison between the set hot-water supply temperature and the internal temperature of the heat medium heat storage device 113. In a case in which the set hot-water supply temperature is lower than the internal temperature of the heat medium heat storage device 113 as a result of the comparison (step S47: Yes), the heat medium circuit switching determining unit 131 makes a determination as to a connection of each heat medium circuit switching device 115 in step S48 so that the current operation is maintained. In this case, the control command value calculating unit 132 calculates control command values for each separate heat medium circuit switching device 115 based on a result of the determination made by the heat medium circuit switching determining unit 131.

For example, in a case in which the current operation is the heat storage operation, the control command value calculating unit 132 continues the heat storage operation until heat is fully stored in the latent heat storage device 112 and the heat medium heat storage device 113, and after that, the control command value calculating unit 132 calculates and generates control command values for each separate heat medium circuit switching device 115 for the heat storage operation to be stopped. Further, in a case in which the current operational state is a stopped state, the control command value calculating unit 132 calculates and generates control command values for each separate heat medium circuit switching device 115 for the stopped state to be continued. The control command device 13 supplies the control command values thus generated separately to each heat medium circuit switching device 115.

Further, in a case in which the set hot-water supply temperature is higher than or equal to the internal temperature of the heat medium heat storage device 113 (step S47: No), the heat medium circuit switching determining unit 131 determines a connection of each heat medium circuit switching device 115 so that the third heat storage hot-water supply operation shown in Fig. 18 is performed. Then, in step S49, the control command value calculating unit 132 calculates and generates control command values for each separate heat medium circuit switching device 115 for the third heat storage hot-water supply operation to be performed. The control command device 13 supplies the control command values thus generated separately to each heat medium circuit switching device 115. This causes the hot-water supply apparatus 1 to perform a heat storage operation according to the third heat storage hot-water supply operation.

On the other hand, in a case in which the set hot-water supply temperature is higher than or equal to the internal temperature of the latent heat storage device 112 in step S46 (step S46: No), the process shifts to step S50. In step S50, the heat medium circuit switching determining unit 131 determines a connection of each heat medium circuit switching device 115 so that the fourth heat storage hot-water supply operation shown in Fig. 19 is performed. Then, the control command value calculating unit 132 calculates and generates control command values for each separate heat medium circuit switching device 115. The control command device 13 supplies the control command values thus generated separately to each heat medium circuit switching device 115. This causes the hot-water supply apparatus 1 to perform a heat storage operation according to the fourth heat storage hot-water supply operation.

### [Modification]

Fig. 23 is a schematic view showing an example of a circuit configuration of a modification of a hot-water supply apparatus according to Embodiment 3. In the modification of Embodiment 3, the hot-water supply apparatus 1 employs an indirect hot-water supply system in which hot water is supplied to the hot-water demand side 3 by rejecting heat stored in the heat source unit 11 to a second heat medium supplied from the tap water supply source 2.

The hot-water supply apparatus 1 further includes a heat exchanger 140 and a hot-water supply pump in addition to the components shown in Fig. 17. The heat exchanger 140 is disposed between the third heat medium circuit switching device 115c and the fourth heat medium circuit switching device 115d. The hot-water supply pump 141 is disposed between the heat exchanger 140 and the third heat medium circuit switching device 115c.

The heat exchanger 140 exchanges heat between the heat medium flowing out from the heat medium heat storage device 113 and the second heat medium supplied from the tap water supply source 2. The hot-water supply pump 141 is configured to cause the heat medium to circulate from the heat pump device 111, the latent heat storage device 112, or the heat medium heat storage device 113 to the heat exchanger 140 and driven by a motor (not illustrated).

In a case in which hot-water is supplied to the hot-water demand side 3, each heat medium circuit switching device 115 is controlled in the hot-water supply apparatus 1 as in the case of the hot-water supply apparatus 1 shown in Fig. 17. Moreover, when the hot-water supply pump 141 is driven, the heat medium circulating through the heat medium circuit flows into the heat exchanger 140. The heat medium flowing into the heat exchanger 140 exchanges heat in the heat exchanger 140 with the second heat medium supplied from the tap water supply source 2 and rejects heat to the second heat medium. Moreover, the second heat medium heated by exchanging heat with the heat medium is supplied to the hot-water demand side 3.

In such a hot-water supply apparatus 1 shown in Fig. 23 too, the third heat storage hot-water supply operation, the fourth heat storage hot-water supply operation, and the fourth hot-water supply operation can be performed as in the case of the hot-water supply apparatus 1 shown in Fig. 17.

As noted above, the hot-water supply apparatus 1 according to Embodiment 3 can bring about effects that are similar to those of Embodiments 1 and 2. Further, in the hot-water supply apparatus 1, each heat medium circuit switching device 115 is switched, whereby the latent heat storage device 112 and the heat medium heat storage device 113 are connected in series or in parallel. As a result of this, in a case in which the storage of heat in either of the two heat storage devices decreases, a heat storage operation on one storage device and a hot-water supply operation involving the use of the other heat storage device can be simultaneously performed.

While the foregoing has described Embodiments 1 to 3 of the present disclosure, the present disclosure is not limited to the aforementioned Embodiments 1 to 3 but can be modified or applied without departing from the scope of the present disclosure.

For example, while a hot-water supply apparatus 1 employing an indirect hot-water supply system has been described as a modification of Embodiment 3, such an indirect hot-water supply system can also be applied to the hot-water supply apparatuses 1 according to Embodiments 1 and 2.

### Reference Signs List

1: hot-water supply apparatus, 2: tap water supply source, 3: hot-water demand side, 10: controller, 11: heat source unit, 12: data storage device, 13: control command device, 51: processing circuit, 52: processor, 53: memory, 111: heat pump device, 112: latent heat storage device, 113: heat medium heat storage device, 114: heat medium pipe, 115: heat medium circuit switching device, 115a: first heat medium circuit switching device, 115b: second heat medium circuit switching device, 115c: third heat medium circuit switching device, 115d: fourth heat medium circuit switching device, 115e: fifth heat medium circuit switching device, 115f: sixth heat medium circuit switching device, 115g: seventh heat medium circuit switching device, 115h: eighth heat medium circuit switching device, 115i: ninth heat medium circuit switching device, 115j: tenth heat medium circuit switching device, 116: pump, 117: sensor, 118: data transmitting device, 119: control command receiving device, 121: set value storage area, 122: measured value storage area, 131: heat medium circuit switching determining unit, 132: control command value calculating unit, 140: heat exchanger, 141: hot-water supply pump

## Claims

1. A hot-water supply apparatus including a heat medium circuit through which a heat medium circulates, the hot-water supply apparatus being configured to perform a heat storage operation of storing heat of the heat medium and a hot-water supply operation of supplying hot water to a hot-water demand side through use of the heat of the heat medium, the hot-water supply apparatus comprising:
a latent heat storage device having a latent heat storage material, the latent heat storage device being configured to store heat and reject heat through transfer of heat between the latent heat storage material and the heat medium;
a heat medium heat storage device in which the heat medium is stored so that thermal stratification is formed; and
a heating device configured to heat the heat medium,
wherein the heating device is configured to heat at least the heat medium flowing out from a lower portion of the heat medium heat storage device.

2. The hot-water supply apparatus of claim 1, wherein
the heat medium heat storage device is connected in series to the latent heat storage device downstream of the latent heat storage device, and
the heat medium heated by the heating device is stored in the heat medium heat storage device after passing through the latent heat storage device.

3. The hot-water supply apparatus of claim 1, wherein
the latent heat storage device and the heat medium heat storage device are connected in parallel so that the heat medium flowing out from one of the latent heat storage device and the heat medium heat storage device is heated by the heating device and hot water is supplied through the use of the heat of the heat medium flowing out from an other of the latent heat storage device and the heat medium heat storage device.

4. The hot-water supply apparatus of any one of claims 1 to 3, wherein
the latent heat storage device and the heat medium heat storage device are connected in series or in parallel so that the heat medium heated by the heating device flows into at least one of the heat storage devices.

5. The hot-water supply apparatus of any one of claims 1 to 4, wherein
water is used as the heat medium, and
at least a heat medium heated by the heating device, a heat medium passing through the latent heat storage device, or a heat medium flowing out from the heat medium heat storage device is supplied to the hot-water demand side.

6. The hot-water supply apparatus of any one of claims 1 to 4, further comprising a heat exchanger configured to exchange heat between the heat medium and a second heat medium supplied from a supply source,
wherein the second heat medium subjected to heat exchange in the heat exchanger is supplied to the hot-water demand side.

7. The hot-water supply apparatus of any one of claims 1 to 6, further comprising:
a heat medium circuit switching device configured to switch from one path of the heat medium circuit to another; and
a controller configured to control the heat medium circuit switching device,
wherein the controller is configured to control the heat medium circuit switching device based on a set hot-water supply temperature, a temperature of the latent heat storage device, and a temperature of the heat medium heat storage device such that at least either of the heat storage operation and the hot-water supply operation is performed.
